# EUROPÄISCHE PATENTSCHRIFT

(11) **EP 1 878 629 B1**
(45) Veröffentlichungstag und Bekanntmachung des Hinweises auf die Patenterteilung: **02.05.2012**
(21) Anmeldenummer: 07111689.1
(22) Anmeldetag: 04.07.2007
(51) Int. Cl.: B60S 9/08

(54) **Höhenverstellbare Stütze für Sattelauflieger oder dergleichen**
Height adjustable support for semi-trailer or similar
Support réglable en hauteur pour semi-remorque ou analogue

(30) Priorität: 13.07.2006 DE 202006010831 U
(43) Veröffentlichungstag der Anmeldung: 16.01.2008
(73) Patentinhaber: SAF-HOLLAND Verkehrstechnik GmbH, 78224 Singen-Hohentwiel (DE)
(72) Erfinder: Riedl, Reinhold, 63897 Miltenberg (DE)
(74) Vertreter: Müller Schupfner & Partner

(56) Entgegenhaltungen:
- DE-A1- 19 616 704
- DE-U1- 20 307 381
- DE-U1-202004 001 054
- DE-U1-202004 001 707
- US-A1- 2003 168 648

## Beschreibung

Die Erfindung bezieht sich auf eine höhenverstellbare Stütze für Sattelauflieger oder dergleichen gemäß dem Oberbegriff des Anspruchs 1. Derartige Stützen sind, in meist paarweiser Anordnung am vorderen Bereich des Sattelaufliegers angeordnet.

Ein gattungsgemäßes Stützenpaar ist aus der EP 1 104 369 B1 bekannt. Eine solche so genannte Vorrichtung zum Abstützen des Aufliegers eines Sattelschleppers weist ein in eine Stütze integriertes zweistufiges Zahnradschaltgetriebe für einen Schnellgang und einen Lastgang sowie eine Freistellung auf. Dabei wird der Schnellgang bei unbelasteter Stütze zum schnellen Aus- oder Einfahren benutzt und der Lastgang zum Anheben oder Absenken des Vorderbereichs des Aufliegers verwendet. Dem Zahnradschaltgetriebe ist ein Kegelradsatz nachgeordnet, dessen Tellerrad auf einer Spindel sitzt. Neben der Ausgestaltung der Stütze für den Handbetrieb wird in dieser Schrift auch eine Ausführung einer Stütze mit Motorantrieb vorgeschlagen, bei der jedoch keine Alternativrnögfichkeit zum manuellen Betreiben besteht. Diese Vorrichtung ist daher entweder, in erster Ausgestaltung nur für den herkömmlichen manuellen Betrieb, oder in einer alternativen Version nur ausschließlich für einen motorischen Betrieb geeignet und deckt daher nicht alle heutigen Anforderungen ab, worauf später eingegangen wird.

In der DE 196 16 704 C2 wird eine Antriebsvorrichtung für die Kombination mit manuell antreibbaren so genannten Sattelstützen beschrieben. Dabei muß ein Umrüstvorgang erfolgen, indem ein zusätzliches Antriebsgetriebe an ein außen an der Stütze befindliches, als Sattelstützengetriebe bezeichnetes, zweistufiges Zahnradschaltgetriebe anzubauen ist, wenn ein motorischer Schnellgang realisiert werden soll. Nach dem Zahnradschaltgetriebe erfolgt der weitere Kraftfluß ebenfalls, wie oben, über einen Kegelradsatz, dessen Tellerrad auf der Spindel angeordnet ist. Das zusätzliche Antriebsgetriebe besteht aufwendigerweise aus einem Antriebsgehäuse mit einer weiteren Zahnradstufe und einem angeflanschten so genannten Antriebsaggregat. Nach der beschriebenen umständlichen Umrüstung verliert das zweistufige Zahnradschaltgetriebe seine Schaltfunktion. Und außerdem wird, in besonders nachteiliger Weise, dadurch ein manuelles Antreiben der Stütze unmöglich. Ein Handbetrieb ist erst wieder möglich, nach dem das beschriebene Antriebsgetriebe abmontiert und eine Handkurbel angebaut ist. Derartige Umrüstaktivitäten sind während des Betreibens zum Wechsel vom Handbetrieb, zum motorischen Antrieb und umgekehrt, dem Fahrer nicht zumutbar. Aufgrund der aufwendigen und voluminösen Ausführung des Antriebsgetriebes und der, ohne Ab-/Umbaumaßnahmen, ebenfalls nicht vorhandenen Alternative eines Motorbetriebs sowie eines Handbetriebs, erfüllt auch diese Konzeption nicht alle Anforderungen.

Aus der US 4,097,840 ist ebenfalls eine Sattelaufliegerstütze bekannt. Die beschriebene Stütze weist ein außensitzendes Antriebsgetriebe auf. Für den manuellen Betrieb ist auf einer Seite ein Zapfen zum Aufstecken einer Handkurbel vorgesehen und auf der anderen Seite kann der Kraftfluß alternativ von einer zwischen dem Rahmen des Sattelaufliegers eingebauten motorischen Antriebseinheit erfolgen. Die Antriebseinheit besteht aufwendigerweise aus einem Gehäuse mit eingebautem Elektromotor, einem zusätzlichen Reduziergetriebe sowie Kupplungen usw. und ist aufwendig sowie anordnungsbedingt relativ ungünstig zu montieren.

Die DE 20 2004 000 592 U beschreibt eine höhenverstellbare Stütze für Sattelauflieger oder dergleichen in die ein quer über oder und seitlich über der Achse der Spindel angeordneter Motor eingebaut ist, auf dessen Welle beispielsweise ein Ritzel sitzt, das im alleinigen Eingriff mit einem Zahnrad ist oder dass, je nach Ausgestaltung dieser Erfindung, in das Zahnrad auch ein so genannter Handantriebsmechanismus eingreift und antreibt.

Der Handantriebsmechanismus weist nur ein Ritzel auf, welches auf einer Antriebswelle sitzt, die mittels einer Handkurbel antreibbar ist und alternativ zusätzlich in das genannte Zahnrad eingreift was nur einer Getriebestufe entspricht. Es ist dabei im Handbetrieb kein Schnellgang möglich.

Die heutigen Sattelschlepper mit luftgefederten Hinterachsen sind in der Lage, über die Druckluftfederbälge am hinteren Achsaggregat, ihr Heck mit der darauf befindlichen Sattelkupplung bezüglich der Sattelhöhe zu regulieren und erforderlichenfalls auch den Vorderbereich eines auch beladenen Sattelaufliegers anzuheben. Um Zeit einzusparen ist es besonders wichtig die noch unbelasteten Sattelaufliegerstützen möglichst schnell bis zum Boden des Abstellortes auszufahren, bevor der Sattelschlepper abgekoppelt und weggefahren werden kann. Das gleiche gilt für das Aufsatteln, wonach die Stützen wieder schnellstmöglich einzufahren sind. Zum Aufsatteln kann derselbe oder ein ebenfalls mit Luftfederung ausgestatteter Sattelschlepper, nach eventueller Angleichung seiner Sattelhöhe mit dem Heck, unter den abgestellten Sattelauflieger gefahren und angekoppelt werden. Grundsätzlich ist heute daher bei der beschriebenen Federungs-/Hubtechnik zum Aufsatteln meistens kein höhenmäßiges Angleichen des Vorderbereichs des Sattelaufliegers an die Sattelhöhe des Sattelschleppers mehr erforderlich und somit kein Hubvorgang der Stützen notwendig. Das gilt im besonderen, wenn innerhalb so genannter geschlossener Fuhrparks ausschließlich artgleiche Sattelschlepper bzw. höhenmäßig darauf abgestimmte Sattelauflieger vorhanden sind. In einer Reihe von Grenzfällen jedoch, z.B. beim Einsatz von älteren Sattelschleppern mit Blattfederungen, die quasi fixe Stattelhöhen aufweisen, muß der Sattelauflieger gegebenenfalls durch einen Hubvorgang mittels der Stützen auf die Sattelhöhe des Sattelschleppers gebracht werden.

Im Trend zur Zeit-/Kosteneinsparung sowie der Bedienungserleichterung und insbesondere einer Automatisierung des An- und Abkoppelungsvorgangs der Sattelzüge sind motorisch zu betreibende Sattelaufliegerstützen unumgänglich. Andererseits muß bei diesen Stützen eine Möglichkeit zum Handantrieb bestehen. Diese Notwendigkeit ergibt sich sowohl aufgrund der geschilderten eventuellen Erfordernis eines Höhenangleichs von Sattelaufliegern, als auch eines möglichen Defekts des Kraftantriebs.

Die US-2003/0168648 zeigt eine höhenverstellbare Stütze für Sattelauflieger mit einem ortsfest angebrachten Stützenaußenrohr und einem darin längs verschiebbar angeordneten Stützeninnenrohr, wobei eine in dem Stützeninnenrohr gelagerte Spindel über eine Getriebeanordnung antreibbar ist.

Die DE 20 2004 001 707 U1, die DE 20 2004 001 054 U1 und die DE 203 07 381 U1 zeigen eine höhenverstellbare Stütze für Sattelauflieger mit einem ortsfest angebrachten Stützenaußenrohr und einem darin längs verschiebbaren Stützeninnenrohr, sowie einem in der Stütze gelagerten, über eine Kegelradstufe antreibbaren, Spindeltrieb.

Der Erfindung liegt die Aufgabe zugrunde eine höhenverstellbare Stütze für Sattelauflieger zu schaffen die alternativ motorisch oder manuell betreibbar ist, wobei, wie herkömmlich, für den Handbetrieb eine Umschaltmöglichkeit in den Schnell- oder den Lastgang besteht. Der Motorantrieb soll in unaufwendiger Weise realisiert werden und ohne Änderungen der Stützenhauptteile an vorhandenen Stützen nachrüstbar sein.

Diese Aufgabe ist erfindungsgemäß durch die im Anspruch 1 gekennzeichnete Stütze gelöst.

Für die erfindungsgemäße Stütze wird vorgeschlagen unter Nutzung einer der herkömmlichen Stützenkonstruktionen mit einem für den Handantrieb entweder an der Stütze angebrachten Zahnradschaltgetriebe oder ein in die Stütze integriertes Zahnradschaltgetriebe vorzusehen, dessen Abtriebswelle quer im Stützenaußenrohr gelagert ist und über eine Kegelradstufe einen vertikalen Spindeltrieb, der die Höhenverschiebung des Stützeninnenrohres bewerkstelligt. Und die Stütze zusätzlich mit einen alternativ benutzbaren Motorantrieb zu kombinieren, bei dem ein an einem Motor befindliches Ritzel oder eine dem Ritzel entsprechende Verzahnung des Antriebszapfens des Motors in ein auf der Getriebeausgangswelle drehfestes durchmessergroßes Zahnrad eingreift.
Erfindungsgemäß wird ein Bearbeitungs- und Montagevorteil erreicht, wenn der Motor an einer Brille befestigt ist, die auf der Getriebeausgangswelle gelagert ist und rotationsgehinderd in der Stütze anliegt. Außerdem wird mit einem derartigen Einbau in besonderem Maße eine Nachrüstungsmöglichkeit vorhandener herkömmlicher Stützen mit dem erfindungsgemäßen Motorantrieb begünstigt.
Um den Motor des Stützenantriebs durch Herbeiführung eines sanften Anlaufs zu schonen wird vorgeschlagen, zwischen dem anliegenden Bereich der Brille und der Abstützstelle, die beispielsweise am Inneren des Stützenaußenrohres sein kann, ein Federelement vorzusehen, wodurch das Motoranlaufmoment abgedämpft wird.
Wenn ein in die Stütze integriertes Zahnradschaltgetriebe zur Anwendung kommt, kann wirtschaftlicher Weise das Ritzel des Motors bzw. die dem Ritzel entsprechende Verzahnung auf dem Antriebszapfen des Motors mit dem zum Zahnradschaltgetriebe gehörenden und auf der Getriebeausgangswelle sitzenden durchmessergroßen Zahnrades in Eingriff gebracht werden. Bekannterweiße kann der Motor an die das Stützenaußenrohr verschließende Abdeckung des integrierten Zahnradschaltgetriebes angeflanscht werden, in welcher die Getriebeeingangswelle und die Getriebeausgangswelle gelagert sind. Zwecks dieser vorteilhaften Ausgestaltung ist vorgesehen, daß auf der Innenseite der Abdeckung eine Motorzentrierung angeformt wird, die in Richtung des durchmessergroßen Zahnrades des integrierten Zahnradschaitgetriebes sektoral offen ist, damit das Ritzel des Motors mit dem Zahnrad kämmen kann.
Schließlich wird eine technisch günstige Ausgestaltung des Motorantriebs erreicht, wenn das Motorritzel konzentrisch zur Motorzentrierung in der Abdeckung des integrierten Zahnradschaltgetriebes bzw. erfindungsgemäß in der Brille auf der Getriebeausgangswelle gelagert wird.

Vorteilhafte Ausgestaltungen der Erfindung gehen aus den Unteransprüchen hervor.

Die Erfindung wird anschließend anhand der Zeichnungen erläutert. Es zeigt:
**Fig.1** eine Frontansicht der erfindungsgemäßen Stütze, wobei im oberen Bereich je hälftig links ein außensitzendes Zahnradschaltgetriebe und rechts eine Stützenausbildung mit integriertem Zahnradschaltgetriebe dargestellt sind,
**Fig.2** eine Draufsicht der in Fig.1 gezeigten Stütze,
**Fig.3** eine Seitensicht der in Fig.1 gezeigten Stütze,
**Fig.4** einen Längsschnitt der erfindungsgemäßer Stütze im oberen Bereich entlang der Linie A-A in Fig.2 und
**Fig.5** einen Längsschnitt der Stütze im oberen Bereich entlang der Linie B-B in Fig.2 und Teilansicht.

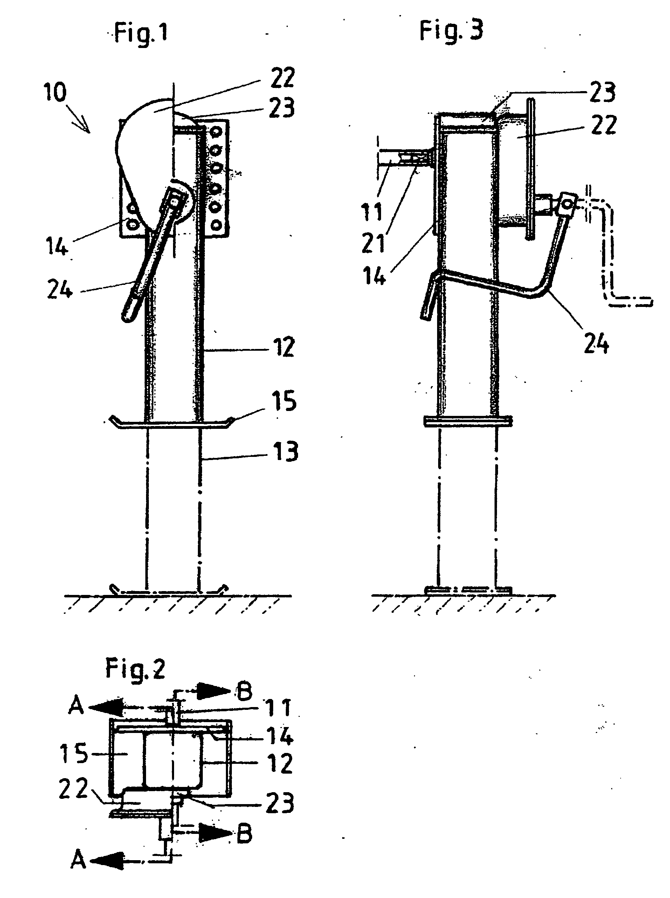

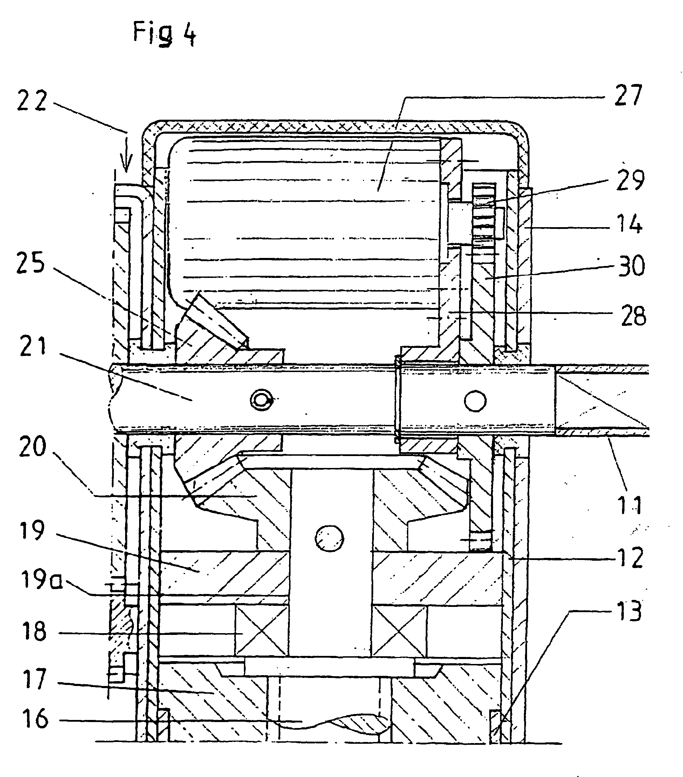

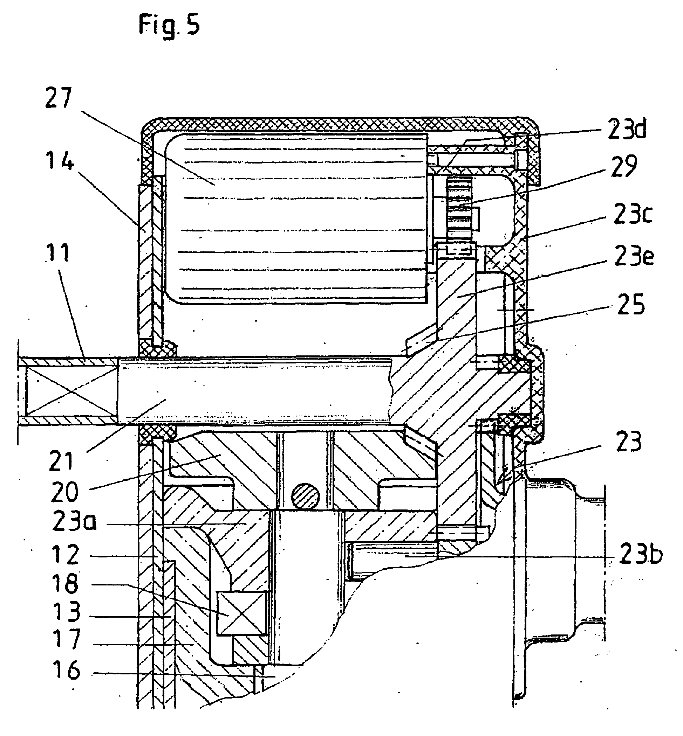

Die in Fig.1 bis 5 gezeigte Stütze **10** wird paarweise am Chassis eines Sattelaufliegers in dessen vorderen Bereich befestigt und ist in Transportstellung eingefahren, d.h. in verkürztem Zustand. Bevor der Sattelauflieger vom Sattelschlepper abgekuppelt wird, werden die Stützen **10** ausgefahren.
Da die Stützen **10** eines jeden Paares nahezu identisch sind bzw. weil die in der Regel von einer ersten Stütze **10** aus über eine Verbindungswelle **11** mitangetriebene zweite Stütze **10** üblicherweise nur getriebemäßig einfacher ausgestaltet ist, d.h. lediglich eine Kegelradstufe aufweist, wird nur eine antriebseitige Stütze **10** beschreiben.
Die Stütze **10** weist ein Stützenaußenrohr **12** und ein darin längsverschiebbar gelagertes Stützeninnenrohr **13** auf. Das Stützenaußenrohr **12** und das Stützeninnenrohr **13** besitzen vorzugsweise quadratische Querschnitte. Die Stütze **10** wird über eine am Stützenaußenrohr **12** sitzende Anschraubplatte **14** am Sattelaufliegerrahmen befestigt. Am unteren Ende des Stützeninnenrohres **13** ist ein Fuß **15** zum Aufsetzen auf den Boden befestigt. Ferner weist die Stütze **10** eine Spindel **16** mit einer Mutter **17** auf. Auf der Spindelschulter sitzt ein Axiallager **18,** das sich an einer im Stützenaußenrohr **12** befestigten Lagerplatte **19** abstützt.
Die Lagerplatte **19** besitzt zur Radiallagerung der Spindel **16** eine durchgehende Lagerbohrung **19a.** Und über der Lagerplatte **19** befindet sich auf dem Zapfen der Spindel **16** ein drehfestes Tellerrad **20.**
Im Zentrum der Stütze **10** und oberhalb des Tellerrades **20** ist eine Getriebeausgangswelle **21** vorhanden, die in den Rohrwänden des Stützenaußenrohres **12,** gelagert ist. Auf einem im Querschnitt quadratischen Zapfen der Getriebeausgangswelle **21** ist die hohle Verbindungswelle **11** aufgesteckt, über die zweite Stütze **10** mit angetrieben wird.
An der Vorderseite der Stütze befindet sich ein zweistufiges außensitzendes Zahnradschaltgetriebe **22** bzw. alternativ dazu, vorwiegend im vorderen Innenbereich des Stützenaußenrohres **12** untergebracht, ein zweistufiges integriertes Zahnradschaltgetriebe **23.** Die in **Fig.2** jeweils zur Hälfte und in **Fig.4** und **Fig.5** in Teilen gezeigten Zahnradschaftgetriebe **22,23** entsprechen handelsüblichen Ausführungen und werden hier nur funktionell beschrieben. Sie besitzen jeweils zwei Zahnradstufen, von denen eine Übersetzung ins Schnelle und die andere eine solche ins Langsame aufweist. Beim Schalten werden durch axiales Verschieben der Eingangswelle des Zahnradschaltgetriebes **22,23,** an der sich eine wegklappbare Handkurbel **24** befindet, die Zahnräder alternativ in Eingriff gebracht. Dadurch wird für den Handbetrieb der Stütze **10** wahlweise ein Schnellgang oder ein Lastgang realisiert. Zwischen den möglichen Eingriffstellungen der Zahnräder befindet sich eine Freigangstellung.
In das Tellerrad **20** greift ein Kegelritzel **25** ein, das drehfest auf der quer über dem Tellerrad 20 liegenden Getriebeausgangswelle **21** des Zahnradschaftgetriebes **22,23** angebracht ist.
Bei der Stützenausführung mit außensitzendem Zahnradschaltgetriebe **22,** wie **Fig.4** zeigt, ist ein Motor **27** vorhanden, der an einer Brille **28** sitzt, die auf der Getriebeausgangswelle **21** gelagert ist und den Motor **27** axparallel beabstandet zur Getriebeausgangswelle **21** positioniert. Die Brille **28** wirkt als Drehmomentstütze und liegt in nicht gezeigter Weise unter Zwischenanordnung eines Federelements innen am Stützenaußenrohr **12** an.
Am Motor **27** sitzt ein Ritzel **29,** das in ein Zahnrad **30** eingreift und die Getriebeausgangswelle **21** antreiben kann.
**Fig.5** zeigt eine Ausgestaltung der Stütze **10** mit innenliegendem Zahnradschaltgetriebe **23.** Hierbei ist ein so genannter Lagerbock **23a** vorhanden in dem sowohl die Spindel **16** als auch die Getriebeeingangswelle **23b** gelagert sind.
Der Motor **27** ist an eine Abdeckung **23c** angeflanscht, die eine Montageöffnung im Stützenaußenrohr **12** verschließt und zur Lagerung der Getriebeingangswelle **23b** und der Getriebeausgangswelle **21** des integrierten Zahnradschaftgetriebes **23** dient,
An der Abdeckung **23c** befindet sich eine angeformte Motorzentrierung **23d.** Das Ritzel **29** am Motor **27** greift in ein Zahnrad **23e** ein um die Getriebeausgangswelle **21** anzutreiben, wozu die Motorzentrierung **23d** sektoral radial offen ist.
Die Stütze **10** ist manuell mittel der Handkurbel **24** im Lastgang und im Schnellgang zu betätigen oder alternativ dazu, in der Freigangstellung des entsprechenden Zahnradschaltgetriebe **22,23,** motorisch zu betreiben.

### Bezugszeichenliste

- **10**: **11**
- Stütze: Verbindungswelle
- **12**: Stützenaußenrohr
- **13**: Stützeninnenrohr
- **14**: Anschraubplatte
- **15**: Fuß
- **16**: Spindel
- **17**: Mutter
- **18**: Axiallager
- **19**: Lagerplatte
- **19a**: Lagerbohrung
- **20**: Tellerrad
- **21**: Getriebeausgangswelle
- **22**: außensitzendes Zahnradschaltgetriebe
- **23**: integriertes Zahnradschaltgetriebe
- **23a**: Lagerbock
- **23b**: Getriebeeingangswelle
- **23c**: Abdeckung
- **23d**: Motorzentrierung
- **23e**: Zahnrad
- **24**: Handkurbel
- **25**: Kegelritzel
- **27**: Motor
- **28**: Brille
- **29**: Ritzel
- **30**: Zahnrad

## Patentansprüche

1. Höhenverstellbare Stütze (10) für Sattelauflieger oder dergleichen, umfassend
ein ortsfest angebrachtes Stützenaußenrohr (12),
ein in dem Stützenaußenrohr (12) längs-Verschiebbar angeordnetes Stützeninnenrohr (13), sowie
eine in der Stütze gelagerte Spindel (16), auf der eine am Stützeninnenrohr (13) befestigte Mutter (17) engeordnet ist, und
ein auf der Spindel (16) sitzendes Tellerrad (20), in das ein auf einer Getriebeausgangswelle befestigtes Kegelritzel (25) eingreift, das über ein zweistufiges, an der Stütze angebrachtes außensitzendes Zahnradschaltgetriebe (22) oder ein zweistufiges in die Stütze integriertes Zahnradschaltgetriebe manuell angetrieben wird,
wobei zum alternativen Betreiben der Stütze (10) für den Handantrieb das Zahnradschaltgetriebe (22,23) und für den Kraftbetrieb ein motorischer Antrieb vorhanden ist,
wobei der motorische Antrieb einen Motor (27) mit einem Ritzel (29) aufweist, oder
wobei der Antriebszapfen des Motors (27) eine dem Ritzel (29) entsprechende Verzahnung besitzt, wobei das Ritzel bzw. die Verzahnung in ein auf der Getriebeausgangswelle (21) drehfest sitzendes Zahnrad (30 ;23e) eingreift, **dadurch gekennzeichnet,**
**dass** der Motor (27) an einer Brille (28) befestigt ist, die auf der Getriebeausgangswelle (21) abgelagert ist.

2. Stütze nach Anspruch 1, **dadurch gekennzeichnet,**
**dass** das Ritzel (29) des Motors (27) oder eine dem Ritzel (29) adäquate Verzahnung auf dem Antriebszapfen des Motors (27) in das auf der Getriebeausgangswelle (21) drehfest sitzende durchmessergroße Zahnrad (23e) des in das Stützenaußenrohr (12) integrierten Zahnradschaltgetriebes (23) eingreift.

3. Stütze nach Anspruch 1 oder 2, **dadurch gekennzeichnet,**
**dass** gegenüber der-Brille (28) und der Stütze (10) ein Federelement wirksam ist.

4. Stütze nach einem der vorhergehenden Ansprüche, **dadurch gekennzeichnet,**
**dass** zwischen dem Motor (27) und der Stütze (10) ein Federelement angeordnet ist.

5. Stütze nach einem der vorhergehenden Ansprüche, **dadurch gekennzeichnet,**
**dass** das Ritzel (29) in der Brille (28) gelagert ist.

## Claims

1. A height-adjustable support (10) for semi-trailers or the like, comprising a stationary mounted support outer tube (12),
a support inner tube (13) which is arranged in the support outer tube (12) and slidable in the longitudinal direction, as well as
a spindle (16) supported in the support, on which spindle a nut (17) fastened on the support inner tube (13) is arranged, and
a crown wheel (20) seated on the spindle (16), with which a bevel pinion (25) fastened on a transmission output shaft engages, which bevel pinion is manually driven by means of a two-stage manual gearbox or transmission (22) attached to the support and mounted on its outside or by means of a two-stage manual gearbox or transmission integrated into the support,
wherein for the alternative driving of the support (10) there is provided for the hand operation the manual gearbox (22, 23) and for the powered operation a motorized drive,
wherein the motorized drive has a motor (27) with a pinion (29), or
wherein the driving journal of the motor (27) has a toothing corresponding to the pinion (29), wherein the pinion or the toothing, respectively, engages with a gearwheel (30; 23e) seated in an unrotatable manner on the transmission output shaft (21), **characterized in**
**that** the motor (27) is fastened on a latch (28) which is supported on the transmission output shaft (21).

2. The support according to claim 1, **characterized in that** the pinion (29) of the motor (27) or a toothing adequate to the pinion (29) on the driving journal of the motor (27) engages with the large-diameter gearwheel (23e) of the manual gearbox (23) integrated into the support outer tube (12), which gearwheel is seated on the transmission output shaft (21) in an unrotatable manner.

3. The support according to claim 1 or 2, **characterized in that** opposite of the latch (28) and the support (10) a spring element is effective.

4. The support according to any one of the preceding claims, **characterized in that** between the motor (27) and the support (10) a spring element is arranged.

5. The support according to any one of the preceding claims, **characterized in that** the pinion (29) is supported in the latch (28).

## Revendications

1. Support réglable en hauteur (10) pour semi-remorques ou analogues, comprenant
un tube extérieur de support (12) monté stationnaire,
un tube intérieur de support (13) agencé avec possibilité de translation longitudinale dans le tube extérieur de support (12), et
une broche (16) montée dans le support, laquelle est agencée sur un écrou (17) fixé sur le tube intérieur de support (13), et
une roue conique (20) calée sur la broche (16), dans laquelle engrène un pignon conique (25) fixé sur un arbre de sortie d'un mécanisme et entraîné manuellement par un mécanisme à engrenages (22) disposé à l'extérieur et fixé sur le support ou par un mécanisme à engrenages à deux étages intégré dans le support,
dans lequel le mécanisme à engrenages (22, 23) est prévu à titre de variante à l'entraînement du support (10) pour l'utilisation à la main, et un entraînement motorisé est prévu à titre de variante à l'entraînement en force,
dans lequel l'entraînement motorisé comprend un moteur (27) avec un pignon (29) ou bien
dans lequel le tourillon d'entraînement du moteur (27) possède une denture correspondant à celle du pignon (29), le pignon ou la denture venant en engrènement dans un engrenage (30 ; 23e) calé solidairement en rotation sur l'arbre de sortie (21) du mécanisme,
**caractérisé en ce que**
le moteur (27) est fixé sur un cadre (28) qui est monté au moyen d'un palier sur l'arbre de sortie (21) du mécanisme.

2. Support selon la revendication 1, **caractérisé en ce que** le pignon (29) du moteur (27), ou bien une denture prévue sur le tourillon d'entraînement du moteur (27) de manière adéquate par rapport au pignon (29), engrène dans l'engrenage un grand diamètre (23e) calé solidairement en rotation sur l'arbre de sortie (21) du mécanisme à engrenages (23) intégré dans le tube extérieur de soutien (12).

3. Support selon la revendication 1 ou 2, **caractérisé en ce qu'**un élément à ressort est actif par rapport au cadre (28) et au support (10).

4. Support selon l'une des revendications précédentes, **caractérisé en ce qu'**un élément à ressort est agencé entre le moteur (27) et le support (10).

5. Support selon l'une des revendications précédentes, **caractérisé en ce que** le pignon (29) est monté dans le cadre (28).
